(19) Europäisches Patentamt
European Patent Office
Office européen des brevets

(11) **EP 3 558 507 B1**

(12) **EUROPÄISCHE PATENTSCHRIFT**

(45) Veröffentlichungstag und Bekanntmachung des Hinweises auf die Patenterteilung:
**08.11.2023 Patentblatt 2023/45**

(21) Anmeldenummer: **17818471.9**

(22) Anmeldetag: **07.12.2017**

(51) Internationale Patentklassifikation (IPC):
***B01J 13/00*** *(2006.01)*

(52) Gemeinsame Patentklassifikation (CPC):
**B01J 13/0043; B01J 13/0047**

(86) Internationale Anmeldenummer:
**PCT/EP2017/081804**

(87) Internationale Veröffentlichungsnummer:
**WO 2018/114351 (28.06.2018 Gazette 2018/26)**

(54) **HERSTELLUNG VON DOTIERTEN NANOPARTIKELN**

PRODUCTION OF DOPED NANOPARTICLES

PRÉPARATION DE NANOPARTICULES DOPÉES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **22.12.2016 DE 102016125432**

(43) Veröffentlichungstag der Anmeldung:
**30.10.2019 Patentblatt 2019/44**

(73) Patentinhaber: **Leibniz-Institut für Neue Materialien gemeinnützige GmbH**
**66123 Saarbrücken (DE)**

(72) Erfinder:
• **MÜLLER, Nina**
**66125 Saarbrücken (DE)**
• **ROGIN, Peter**
**66123 Saarbrücken (DE)**
• **DE OLIVEIRA, Peter William**
**66123 Saarbrücken (DE)**
• **MÜLLER, Thomas**
**66540 Neunkirchen (DE)**

(74) Vertreter: **Patentanwälte Gierlich & Pischitzis Partnerschaft mbB**
**Gerbermühlstraße 11**
**60594 Frankfurt am Main (DE)**

(56) Entgegenhaltungen:
WO-A1-2011/079908    WO-A2-2005/105304
DE-A1- 10 235 803    DE-A1-102010 052 033

**Beschreibung**

Gebiet der Erfindung

Die Erfindung betrifft ein Verfahren zur Herstellung von dotierten Nanopartikeln, insbesondere mit N- oder N/C-dotierten Nanopartikeln.

Stand der Technik

Im Stand der Technik sind viele Methoden bekannt, Nanopartikel in Sol-Gel-Verfahren herzustellen (DE 10 2004 009 287 A1). Mit diesen Verfahren können Nanopartikel in guter Qualität erhalten werden. Allerdings sind diese Verfahren oft mehrstufig und erfordern z.B. die Zugabe von Katalysatoren, welche zu Verunreinigungen im Produkt führen. Auch die Herstellung von mit Metallen dotierten Nanopartikeln ist bekannt.

Bei einer Dotierung der Nanopartikeln mit nichtmetallischen Elementen, wie N oder C, sind häufig weitere Verfahrensschritte notwendig. Häufig müssen die Partikel auch einer zusätzlichen Kalzinierung unterworfen werden.

Durch die Dotierung kann, insbesondere bei photokatalytisch aktiven Nanopartikeln, die Absorptionswellenlänge beeinflusst werden. WO 2011/079908 A1 offenbart ein Verfahren zur Herstellung von nanoskaliger Partikel umfassend die folgenden Schritte: Bereitstellung einer Zusammensetzung umfassend einer hydrolysierbaren Metallverbindung und einer Verbindung mit mindestens einer Hydroxylgruppe; hydrothermale Behandlung der Zusammensetzung; Isolierung der nanoskaligen Partikel. Die Partikel sind dotiert.

Aufgabe

Aufgabe der Erfindung ist es, ein Verfahren zur Herstellung von dotierten Nanopartikeln anzugeben, welches die Nachteile des Standes der Technik vermeidet.

Lösung

Diese Aufgabe wird durch die Erfindungen mit den Merkmalen der unabhängigen Ansprüche gelöst. Vorteilhafte Weiterbildungen der Erfindungen sind in den Unteransprüchen gekennzeichnet. Der Wortlaut sämtlicher Ansprüche wird hiermit durch Bezugnahme zum Inhalt dieser Beschreibung gemacht.

Die Erfindung betrifft ein Verfahren zur Herstellung von dotierten Nanopartikeln. Die Erfindung ist wie in den Ansprüchen offenbart.

Im Folgenden werden einzelne Verfahrensschritte näher beschrieben. Die Schritte müssen nicht notwendigerweise in der angegebenen Reihenfolge durchgeführt werden, und das zu schildernde Verfahren kann auch weitere, nicht genannte Schritte aufweisen. In einem ersten Schritt wird eine Zusammensetzung umfassend mindestens einer hydrolysierbaren Metallverbindung, mindestens einer Verbindung mit mindestens einer Hydroxylgruppe, eine Mineralsäure umfassend mindestens ein Stickstoffatom bereitgestellt.

In einer weiteren Ausführungsform der Erfindung handelt es sich bei der hydrolysierbaren Metallverbindung um mindestens eine Verbindung der allgemeinen Formel (I)

$$MX_n,$$

wobei M ein Metall und X eine hydrolysierbare Gruppe ist, die gleich oder verschieden sein kann, wobei zwei Gruppen X durch eine zweizähnige hyrolysierbare Gruppe oder eine Oxogruppe ersetzt sein können oder drei Gruppen X durch eine dreizähnige hydrolysierbare Gruppe ersetzt sein können, und n der Wertigkeit des Elements entspricht und häufig 3 oder 4 ist.

Mit Vorteil ist M ausgewählt aus der Gruppe enthaltend Mg, B, Al, Ga, In, Si, Ge, Sn, Pb, Y, Ti, Zr, V, Nb, Ta, Mo, W, Fe, Cu, Ag, Zn, Cd, Ce und La, bevorzugt sind Al, B, Si, Pb, Ti, Zr, besonders bevorzugt Ti, Zn und Zr. Ti ist besonders wegen der Bildung von photokatalytisch aktiver $TiO_2$-Partikel interessant.

Beispiele für hydrolysierbare Gruppen sind z.B. Halogen (F, Cl, Br oder I, insbesondere Cl und Br), $C_{1-20}$-Alkoxy, bevorzugt $C_{1-10}$-Alkoxy, wie z.B. Ethoxy, n-Propoxy, i-Propoxy, n-Butoxy, i-Butoxy, sek.-Butoxy, tert.-Butoxy, lineares oder verzweigtes Pentoxy, Hexoxy, Heptoxy oder Octoxy, wie 2-Ethylhexoxy, Cyclohexyloxy, $C_{1-3}$-Acyloxy, wie z.B. Acetoxy oder Propionyloxy, $C_1$-$C_{20}$-Alkenyloxy, bevorzugt $C_{1-10}$-Alkenyloxy, wie Vinyl oder Allyloxy, wie Butenoxy, Pentenoxy, Hexenoxy, Heptenoxy, Octenoxy und höhere Alkenoxygruppen, wobei Pentenyl und Hexenyl bevorzugt sind, z.B. $CH_3CH_2CH{=}CHCH_2CH_2O$- oder $CH_2{=}CH(CH_2)_4O$-, $C_1$-$C_{20}$-Alkinyloxy, bevorzugt $C_1$-$C_{10}$-Alkinyloxy, wie Pentinyloxy oder Hexinyloxy, oder $C_{2-3}$-Alkylcarbonyl, wie z. B. Acetyl, Aryloxy-, Aralkyloxy- und Alkaryloxygruppen mit 6 bis 20, bevorzugt 6 bis 15 Kohlenstoffatomen, wie Phenyloxy, Naphthyloxy, Tolyloxy und Benzyloxy.

Die Alkoxygruppe kann verzweigt oder bevorzugt linear sein, eine vorteilhafte verzweigte Alkoxygruppe ist z.B. 2-Ethylhexoxy. Die Alkenyloxygruppe kann verzweigt oder bevorzugt linear sein, die Doppelbindung kann an beliebiger Stelle sein. Es kann auch mehr als eine Doppelbindung vorhanden sein.

Die hydrolysierbare Gruppe kann auch eine Ethergruppe sein, z.B. der allgemeinen Formel $R^1(-OR^2)_xO-$, worin $R^1$ eine $C_{1-20}$-Alkylgruppe ist, $R^2$ eine Alkylengruppe, z.B. mit 1 bis 4 Kohlenstoffatomen, wie Ethylen oder Propylen, ist und x eine ganze Zahl von 1 bis 4, bevorzugt 1 oder 2 ist. Die Gruppe $R^1$ ist bevorzugt eine $C_1$-$C_{10}$-Alkylgruppe, wie Methyl, Ethyl, Butyl, Pentyl, Hexyl, Cyclohexyl, Heptyl oder Octyl. Konkrete Beispiele sind Butoxyethoxy und Hexoxyethoxy.

Beispiele für hydrolysierbare Verbindungen sind $Al(OCH_3)_3$, $Al(OC_2H_5)_3$, $Al(O-n-C_3H_7)_3$, $Al(O-i-C_3H_7)_3$, $AlCl_3$, $AlCl(OH)_2$, $Ti(OCH_3)_4$, $Ti(OC_2N_5)_4$, $TiCl_4$, $Ti(OC_2H_5)_4$, $Ti(O-n-C_3H_7)_4$, $Ti(O-i-C_3H_7)_4$, $ZrCl_4$, $Zr(OC_2H_5)_4$, $Zr(O-n-C_3H_7)_4$, $Zr(O-i-C_3H_7)_4$, $ZrOCl_2$, Borsäure, $BCl_3$, $B(OCH_3)_3$, $B(OC_2H_5)_3$, $SnCl_4$, $Sn(OCH_3)_4$, $Sn(OC_2H_5)_4$, $Zn(OAc)_2$, $Si(OOCCH_3)_4$, $VOCl_3$ und $VO(OCH_3)_3$, $Si(OCH_3)_4$, $Si(OC_2H_5)_4$, $Si(O-n-$ oder $i-C_3H_7)_4$, $SiCl_4$, $HSiCl_3$, $Al(O-n-C_4H_9)_3$, $Al(O-sek.-C_4H_9)_3$, $Al(OC_2H_4OC_4H_9)_3$, $Ti(OC_4H_9)_4$, $Ti(pentoxy)_4$, $Ti(hexoxy)_4$, $Ti(2-ethylhexoxy)_4$, $Zr(OC_4H_9)_4$, $Zr(pentoxy)_4$, $Zr(hexoxy)_4$, $Zr(2-ethylhexoxy)_4$, sowie Zr-Verbindungen, die komplexierende Reste aufweisen, wie z.B. β-Diketon- und (Meth)acrylreste, $Si(OC_4H_9)_4$, wobei die genannten Pentoxy- und Hexoxyreste linear oder verzweigt sein können.

Bevorzugt steht M für Ti, Zn oder Zr. Konkret bevorzugte Titanate sind $Ti(OCH_3)_4$, $Ti(OC_2H_5)_4$ und $Ti(n-$ oder $i-OC_3H_7)_4$.

Die hydrolysierbaren Verbindungen mit den genannten hydrolysierbaren Gruppen können im Handel erhältlich sein. Sie können auch aus anderen hydrolysierbaren Verbindungen hergestellt werden, z.B. durch Austauschreaktionen. Dies kann z.B. zweckmäßig sein, wenn andere hydrolysierbare Verbindungen leichter zugänglich sind. So kann z.B. ein Metall- oder Halbmetallalkoxid, wie ein Metallethoxid oder -propoxid, mit einem höheren Alkohol, z.B. Pentanol, Hexanol oder 2-Ethylhexanol, umgesetzt werden, um die Alkoxygruppe des Alkoxids durch die Alkoxygruppe des höheren Alkohols zu ersetzen. Die Austauschreaktion kann vollständig oder nur teilweise durchgeführt werden.

Eine solche Austauschreaktion kann auch verwendet werden, um die gewünschten Verbindungen mit hydrolysierbaren, lipophilen Gruppen aus anderen hydrolysierbaren Verbindungen in situ zu bilden und ohne Isolierung direkt zu den gewünschten Nanopartikeln umzusetzen.

Die hydrolysierbaren Metall- oder Halbmetallverbindungen, z.B. solche der obigen Formel (I), können auch komplexierende Reste aufweisen, wie z.B. β-Diketon- und (Meth)acrylreste. Insbesondere bei den reaktionsfähigeren Alkoxiden (z.B. von Al, Ti, Zr usw.) kann es sich unter Umständen empfehlen, diese in komplexierter Form einzusetzen, wobei Beispiele für geeignete Komplexierungsmittel ungesättigte Carbonsäuren und β-DicarbonylVerbindungen, wie z.B. Methacrylsäure, Acetylaceton und Acetessigsäureethylester, sind.

Es können auch hydrolysierbare Verbindungen eingesetzt werden, die mindestens eine nicht hydrolysierbare Gruppe enthalten. Beispiele sind Silane der allgemeinen Formel

$$R_aSiX_{(4-a)} \qquad (II),$$

worin die Reste R gleich oder verschieden sind und nicht hydrolysierbare Gruppen darstellen, die Reste X gleich oder verschieden sind und hydrolysierbare Gruppen oder Hydroxygruppen bedeuten und a den Wert 1, 2 oder 3 hat, oder ein davon abgeleitetes Oligomer. Der Wert a ist bevorzugt 1 oder 2.

In der allgemeinen Formel (II)) sind die hydrolysierbaren Gruppen X, die gleich oder voneinander verschieden sein können, beispielsweise Wasserstoff oder Halogen (F, Cl, Br oder I), Alkoxy (vorzugsweise $C_{1-6}$-Alkoxy, wie z.B. Methoxy, Ethoxy, n-Propoxy, i-Propoxy und Butoxy), Aryloxy (vorzugsweise $C_{6-10}$-Aryloxy, wie z.B. Phenoxy), Acyloxy (vorzugsweise $C_{1-6}$-Acyloxy, wie z.B. Acetoxy oder Propionyloxy), Alkylcarbonyl (vorzugsweise $C_{2-7}$-Alkylcarbonyl, wie z.B. Acetyl), Amino, Monoalkylamino oder Dialkylamino mit vorzugsweise 1 bis 12, insbesondere 1 bis 6 Kohlenstoffatomen. Bevorzugte hydrolysierbare Reste sind Halogen, Alkoxygruppen (insbesondere Ethoxy und Methoxy) und Acyloxygruppen. Sofern mit einem Silan der Formel (II)) hydrolysierbare Gruppen in die Nanopartikel eingeführt werden sollen, kann es bei X um eine der vorstehend z.B. bei den Verbindungen der Formel (I) beschriebenen hydrolysierbaren Gruppen handeln.

Die Zusammensetzung umfasst noch mindestens eine Verbindung mit mindestens einer Hydroxylgruppe. Mit Vorteil ist diese Verbindung das Lösungsmittel für die hydrolysierbare Verbindung. Bevorzugt handelt es sich um eine Verbindung mit einem Siedepunkt von unter 200 °C (bei Normaldruck). Solche sind beispielsweise niedere aliphatische Alkohole ($C_1$-$C_6$-Alkohole), wie Methanol, Ethanol, 1-Propanol, i-Propanol, sek.-Butanol, tert.-Butanol, Isobutylalkohol, n-Butanol und die Pentanol-Isomeren, insbesondere 1- Pentanol. Bevorzugt sind dabei Methanol, Ethanol, n-Propanol, iso-Propanol und n-Butanol.

In einer bevorzugten Ausführungsform der Erfindung umfasst die Zusammensetzung auch Wasser zur Hydrolyse der hydrolysierbaren Metallverbindung. Besonders bevorzugt ist Wasser in einer unterstöchiometrischen Menge, bezogen auf die hydrolysierbaren Gruppen der Metallverbindung, d.h. bezogen auf 1 Mol hydrolysierbarer Gruppen in der Metallverbindung sind weniger als ein Mol Wasser vorhanden. Anders ausgedrückt werden bei einer hydrolysierbaren Metallverbindung mit 4 hydrolysierbaren Gruppen, bezogen auf 1 Mol Metallverbindung (z.B. eine Titanverbindung), weniger als 4 Mol Wasser zugegeben. Bevorzugt werden nicht mehr als 0,7 Mol, bevorzugter nicht mehr als 0,6 Mol und insbesondere nicht mehr als 0,5 Mol oder 0,4 Mol, und nicht weniger als 0,30 Mol, bevorzugter nicht weniger als 0,35 Mol Wasser, bezogen auf 1 Mol hydrolysierbarer Gruppen in der Metallverbindung, verwendet.

Dadurch verbleiben nach Abschluss der Synthese hydrolysierbare Gruppen, insbesondere aus der Metallverbindung, auf der Oberfläche der hergestellten Partikel, was deren Redispergierbarkeit deutlich verbessert. Außerdem können solche Nanopartikel einfacher oberflächenmodifiziert werden.

Die Zusammensetzung umfasst außerdem eine Mineralsäure umfassend mindestens ein Stickstoffatom.

Die Mineralsäure umfassend mindestens ein Stickstoffatom ist bevorzugt Salpetersäure. Darunter wird im Sinne dieser Erfindung in Wasser gelöstes $NO_z$ verstanden.

Zur Dotierung mit Stickstoff wird die Mineralsäure in zur Dotierung ausreichender Menge zugegeben. Im allgemeinen werden z. B. solche Mengenverhältnisse eingesetzt, dass sich ein Molverhältnis von Stickstoff (N) zum Metall der hydrolysierbaren Metallverbindung (Me) (N/Me) von 0,0005 : 1 bis 0,4 : 1, bevorzugt 0,001 : 1 bis 0,3 : 1 und bevorzugter 0,005 : 1 bis 0,3 : 1 ergibt. Das Verhältnis kann sich auch aus einer Kombination von Verbindungen und/oder Mineralsäuren ergeben.

Es kann erforderlich sein, zur Hydrolyse der hydrolysierbaren Metallverbindung mindestens einen sauren Hydrolysierungskatalysator zuzugeben. Dies ist bevorzugt eine Mineralsäure wie Salzsäure, Schwefelsäure oder Phosphorsäure. Dies ist insbesondere der Fall wenn zur Dotierung nur eine geringe Menge an Mineralsäure umfassend mindestens ein Stickstoffatom verwendet wird.

In einer besonders bevorzugten Ausführungsform dient die Mineralsäure umfassend mindestens ein Stickstoffatom auch als saurer Hydrolysierungskatalysator. Die Verwendung von Salpetersäure hat dabei den besonderen Vorteil, dass diese Säure gleichzeitig als Hydrolysierungskatalysator für die hydrolysierbare Metallverbindung dient. Bevorzugt umfasst die Zusammensetzung keinen weiteren Katalysator für die Hydrolyse der Metallverbindung. Außerdem werden keine weiteren Elemente außer H, N und O in die Reaktion eingeführt, welche die erhaltenen Partikel verunreinigen könnten. Bevorzugt wird die Salpetersäure in einem Mengenverhältnis eingesetzt, dass sich ein Molverhältnis von Stickstoff (N) zum Metall der hydrolysierbaren Metallverbindung (Me) (N/Me) von 0,05 : 1 bis 0,7 : 1, bevorzugt 0,05 : 1 bis 0,5 : 1 und bevorzugter 0,1 : 1 bis 0,4 : 1 ergibt. Bevorzugt umfasst die Zusammensetzung keine weiteren Hydrolysierungskatalysatoren.

In einer weiteren Ausführungsform der Erfindung umfasst die Zusammensetzung keine organische Verbindung umfassend mindestens ein Stickstoffatom.

Die sich ergebenden Mischung wird dann bei einer Temperatur von mindestens 60 °C unter Bildung einer Dispersion oder eines Niederschlags von Nanopartikeln behandelt. Diese Wärmebehandlung erfolgt hydrothermal.

Die Wärmebehandlung erfolgt vorzugsweise über einen Zeitraum von 0,5 bis 30 h, bevorzugt 0,5 bis 12 h, wobei die Dauer von der Temperatur und dem gegebenenfalls angelegten oder autogenem Druck abhängt. Beispielsweise erhält man im Falle von Ti-Verbindungen Anatas durch Hydrothermalbehandlung bei 225 °C und autogenem Druck nach einer Reaktionsdauer von 1 h in nanopartikulärer kristalliner Form.

Unter einer Hydrothermal-Behandlung versteht man im Allgemeinen eine Wärmebehandlung einer wässrigen Lösung oder Suspension unter Überdruck, z. B bei einer Temperatur über dem Siedepunkt des Lösungsmittels und einem Druck über 1 bar.

In der vorliegenden Erfindung wird auch eine Wärmebehandlung in einem überwiegend organischen Lösungsmittel, unter Überdruck als hydrothermale Behandlung verstanden.

Bei der hydrothermalen Behandlung wird die Mischung in einem geschlossenen Behälter oder einem geschlossenen Autoklaven wärmebehandelt. Die Behandlung erfolgt vorzugsweise bei einer Temperatur im Bereich von 75 °C bis 300 °C, vorzugsweise über 200 °C, bevorzugter 225 bis 275 °C, z. B. etwa 250 °C. Durch die Erwärmung, insbesondere über den Siedepunkt des Lösungsmittels, wird in dem geschlossenen Behälter oder Autoklaven ein Druck aufgebaut (autogener Druck).

Der erhaltene Druck kann z. B. über 1 bar, insbesondere 50 bis 500 bar oder mehr, vorzugsweise 100 bis 300 bar, z. B. 225 bar, betragen. In der Regel erfolgt die Hydrothermalbehandlung mindestens 0,5 h und bevorzugt bis zu 10 oder 15 h.

Die Wärmebehandlung gemäß Schritt b) wird solange durchgeführt, bis die gewünschten Nanopartikel gebildet sind.

Die Nanopartikel werden vom Lösungsmittel abgetrennt. Hierfür können alle dem Fachmann bekannten Verfahren verwendet werden. Eine Zentrifugation ist besonders geeignet. Gegebenenfalls können vorher flüchtige Bestandteile, wie z.B. die Verbindung mit mindestens einer Hydroxylgruppe, unter Unterdruck, z. B. im Rotationsverdampfer bei 40 mbar, abdestilliert werden.

Die abgetrennten Nanopartikel werden dann getrocknet (z. B. bei 40 °C und 10 mbar). In dieser Form können die Nanopartikel auch gut gelagert werden. Die Nanopartikel können auch aus einer wässrigen Suspension gefriergetrocknet werden.

Die erhaltenen Nanopartikel zeichnen sich durch besonders gute Redispergierbarkeit aus. Sie können einfach vollständig redispergiert werden. Dies ist wichtig zur Herstellung von transparenten Dispersionen. Gegebenenfalls kann es notwendig sein, den pH-Wert der Dispersion unter Zugabe von Säure einzustellen. Es kann auch zusätzlich eine Oberflächenmodifikation bei der Redispergierung durchgeführt werden.

Gerade die hydrothermale Behandlung im geschlossenen Behälter ermöglicht die Verwendung von flüchtigen Verbindungen, insbesondere Salpetersäure zur Dotierung der Partikel. Würden die Partikel unter Rückfluss oder einfachem Erwärmen hergestellt, würde die flüchtige Verbindung schon durch das Erwärmen aus der Zusammensetzung entfernt, ehe es zur Dotierung kommen kann. Auch muss mit einem sehr hohen Überschuss gearbeitet werden, so dass eine genaue Steuerung der Dotierung nicht möglich ist.

Die mit dem erfindungsgemäßen Verfahren erhaltenen Nanopartikel können direkt eingesetzt werden. Eine Kalzinierung ist nicht notwendig.

Die Zusammensetzung kann auch noch weitere Verbindungen zur Dotierung umfassen. Zur Dotierung kann jede geeignete Metallverbindung eingesetzt werden, z. B. ein Oxid, ein Salz oder eine Komplexverbindung, z. B. Halogenide, Nitrate, Sulfate, Carboxylate (z. B. Acetate) oder Acetylacetonate. Die Verbindung sollte in dem für die Mischung verwendeten Lösungsmittel zweckmäßigerweise löslich sein.

Als Metall eignet sich jedes Metall, insbesondere ein Metall ausgewählt aus der 5. bis 14. Gruppe des Periodensystems der Elemente und der Lanthanoiden und Actiniden. Das Metall kann in der Verbindung in jeder geeigneten Oxidationsvorstufe vorkommen. Beispiele für geeignete Metalle für die Metallverbindung sind W, Mo, Cr, Zn, Cu, Ag, Au, Sn, In, Fe, Co, Ni, Mn, Ru, V, Nb, Ir, Rh, Os, Pd und Pt. Metallverbindungen von W (VI), Mo (VI), Cr (lit), Zn (II), Cu (II), Au (III), Sn (IV), In(III), Fe (III), Co (II), V (V) und Pt (IV) werden bevorzugt verwendet. Sehr gute Ergebnisse werden insbesondere mit W (VI), Mo (VI), Zn (II), Cu (II), Sn (IV), In(III) und Fe (III) erreicht. Konkrete Beispiele für bevorzugte Metallverbindungen sind $WO_3$, $MoO_3$, $FeCl_3$, Silberacetat, Zinkchlorid, Kupfer (II)-chlorid, Indium (III)-oxid und Zinn (IV)-acetat.

Das Mengenverhältnis zwischen der Metallverbindung und der hydrolysierbaren Metallverbindung hängt auch von dem eingesetzten Metall und dessen Oxidationsstufe ab. Im allgemeinen werden z. B. solche Mengenverhältnisse eingesetzt, dass sich ein Molverhältnis von Metall der Metallverbindung (Me') zum Metall der hydrolysierbaren Metallverbindung (Me) (Me'/Me) von 0,0005 : 1 bis 0,2 : 1, bevorzugt 0,001 : 1 bis 0,1 : 1 und bevorzugter 0,005 : 1 bis 0,1 : 1 ergibt.

Anstelle der Metalldotierung kann auch eine zusätzliche Dotierung mit Halbmetall- oder Nichtmetallelementen durchgeführt werden, z. B. mit Kohlenstoff, Phosphor, Schwefel, Bor, Arsen, Antimon, Selen, Tellur, Chlor, Brom und/oder Iod. Zu diesem Zweck werden entweder die Elemente als solche oder geeignete Elementverbindungen als Dotiermittel eingesetzt. Eine Dotierung ist insbesondere bei Verwendung von Titanverbindungen von Vorteil, um die photokatalytischen Eigenschaften zu beeinflussen.

In einer bevorzugten Weiterbildung der Erfindung umfasst die Zusammensetzung eine organische kohlenstoffhaltige Verbindung zur zusätzlichen Dotierung der Partikel mit Kohlenstoff.

Dies ist bevorzugt eine in der Zusammensetzung lösliche organische Verbindung mit mindestens 4 Kohlenstoffatomen. Bevorzugt umfasst diese organische Verbindung nur H, C und O-Atome. Es kann sich beispielsweise Verbindungen umfassend Ether-, Ester-, Karbonsäure- oder Hydroxylgruppen oder Kombinationen dieser Gruppen handeln. Sie sind bevorzugt in der Zusammensetzung löslich.

Bevorzugt weist diese Verbindung eine Zersetzungstemperatur unterhalb der Temperatur der hydrothermalen Behandlung auf.

Als Verbindungen sind insbesondere Verbindungen bevorzugt, welche unter den Bedingungen der Reaktion zur Kohlenstoff reduziert werden können. Dies sind bevorzugt organische Verbindung umfassend Keto-, oder Aldehydgruppen, wie Aldosen oder Ketosen, insbesondere C5- oder C6-Ketosen oder Aldosen, wie Glukose.

Die erfindungsgemäße Zusammensetzung ist vor der hydrothermalen Behandlung eine homogene, insbesondere einphasige, Lösung. Alle Bestandteile liegen gelöst vor.

Die hergestellten Partikel sind Nanopartikel. Dies bedeutet, dass sie einen durchschnittlichen Durchmesser von unter 100 nm aufweisen, bevorzugt einen durchschnittlichen Durchmesser von unter 50 nm, besonders bevorzugt von unter 20 nm (bestimmt mittels TEM).

Insbesondere weisen die hergestellten Nanopartikel einen maximalen Durchmesser von unter 200 nm auf, bevorzugt unter 100 nm, besonders bevorzugt unter 50 nm, beziehungsweise unter 30 nm auf (bestimmt mittels TEM).

In einer Ausführungsform der Offenbarung sind mindestens 50 % der Partikel würfelförmig, bevorzugt mindestens 60 % insbesondere mindestens 80 %.

Bevorzugt werden photokatalytisch aktive Partikel hergestellt, besonders bevorzugt handelt es sich um dotierte ZnO- oder $TiO_2$-Nanopartikel, wobei $TiO_2$ bevorzugt ist.

Die erhaltenen dotierten $TiO_2$-Nanopartikel der Dispersion, des Niederschlags oder des Pulvers liegen überwiegend kristallin in der Anatas-Form vor. Vorzugsweise macht der kristalline Anteil der erhaltenen dotierten $TiO_2$-Nanopartikeln mehr als 90%, bevorzugt mehr als 95% und insbesondere mehr als 97% aus, d.h. der amorphe Anteil liegt insbesondere unter 3%, z.B. bei 2%.

Die dotierten Nanopartikel, insbesondere $TiO_2$-Nanopartikel, zeichnen sich insbesondere dadurch aus, dass sie bei photokatalytische Aktivität auch bei einer Anregung mit sichtbarem Licht einer Wellenlänge > 380 nm aufweisen ("Visible-light oder Tageslicht-Photokatalysatoren").

Die photokatalytische Aktivität kann beispielsweise durch die Abscheidung von metallischen Schichten unter den Bedingungen der erfindungsgemäßen Beispiele nachgewiesen werden.

Die erhaltenen Nanopartikel können auch oberflächenmodifiziert werden, beispielsweise um ihnen eine Kompatibilität zu einem Lösungsmittel oder Matrixmaterial bei der weiteren Verarbeitung zu verleihen.

In einer bevorzugten Ausführungsform werden die hergestellten Nanopartikel mit Funktionsgruppen ergänzt. Bei diesen Funktionsgruppen handelt es sich um Gruppen auf der Oberfläche der Nanopartikel, die den Nanopartikeln eine zusätzliche gewünschte Funktion verleihen. Durch eine solche Funktionalisierung können die Nanopartikel nach Bedarf gewünschten Eigenschaften angepasst werden.

Hierüber können die Nanopartikel z.B. gegenüber anderen Materialien, mit denen sie z.B. gemischt werden sollen, eine verbesserte oder, falls zweckmäßig, eine verschlechterte Kompatibilität erhalten. Durch die Funktionsgruppe kann z.B. eine hydrophobe, hydrophile, oleophobe oder oleophile Funktion eingeführt werden. Zur Erzielung hydrophober und/oder oleophober Eigenschaften können z.B. Funktionsgruppen eingeführt werden, die fluorierte Kohlenwasserstoffketten umfassen.

Eine weitere bevorzugte Funktionsgruppe ist eine solche, bei der eine oder mehrere funktionelle Gruppen auf der Oberfläche der Nanopartikel eingeführt werden. Über diese sind dann z.B. auch Reaktionen mit anderen Materialien oder zwischen den Nanopartikeln möglich. Besonders bevorzugt sind funktionelle Gruppen, die für Vernetzungsreaktionen geeignet sind, so dass die so modifizierten Nanopartikel z.B. mit einem matrixbildenden Material mit geeigneten funktionellen Gruppen durch chemische Reaktion mit dem Material verknüpft werden oder diese vernetzten.

Derartige Funktionsgruppen können durch Umsetzung der Nanopartikel mit einem Oberflächenmodifizierungsmittel erhalten werden. Bei der Oberflächenmodifizierung von Nanopartikeln handelt es sich um ein bekanntes Verfahren, wie es von der Anmelderin z.B. in WO 93/21127 (DE 4212633) oder WO 96/31572 beschrieben wurde. Die Herstellung der oberflächenmodifizierten Nanopartikel kann prinzipiell auf zwei verschiedenen Wegen durchgeführt werden, nämlich zum einen durch Oberflächenmodifizierung von bereits hergestellten nanoskaligen Nanopartikeln und zum anderen durch Herstellung dieser Nanopartikel unter Verwendung von Oberflächenmodifizierungsmitteln. Letztgenanntes wurde vorstehend ausführlich für die Silane der Formel (II) erläutert, die bei der Bildung der Nanopartikel in situ als Oberflächenmodifizierungsmittel wirken können.

Die Oberflächenmodifizierung von fertigen Nanopartikel kann einfach durch Mischen der Nanopartikel mit dem Oberflächenmodifizierungsmittel erfolgen. Die Umsetzung erfolgt gegebenenfalls in einem Lösungsmittel und, falls notwendig, durch mechanische oder thermische Energiezufuhr und/oder durch Katalysatorzugabe.

Als Oberflächenmodifizierungsmittel eignen sich Verbindungen, die zum einen über eine oder mehrere Gruppen verfügen, die mit auf der Oberfläche der Nanopartikel vorhandenen reaktionsfähigen Gruppen (wie beispielsweise OH-Gruppen) reagieren oder wechselwirken können. Die Oberflächenmodifizierungsmittel können z.B. kovalente, koordinative (Komplexbildung) und ionische (salzartige) Bindungen zur Oberfläche der Nanopartikel ausbilden, während unter den reinen Wechselwirkungen beispielhaft Dipol-Dipol-Wechselwirkungen, Wasserstoffbrückenbindungen und van der Waals-Wechselwirkungen zu nennen sind. Bevorzugt ist die Ausbildung von kovalenten Bindungen, ionischen Bindungen oder die Komplexierung.

Die Oberflächenmodifizierungsmittel weisen in der Regel ein relativ niedriges Molekulargewicht auf. Beispielsweise kann das Molekulargewicht weniger als 1500, insbesondere unter 1000 und vorzugsweise unter 700 und besonders bevorzugt unter 500 betragen, aber auch ein höheres Molekulargewicht, z.B. bis zu 2000 und mehr, ist möglich.

Für die Oberflächenmodifikation der Nanopartikel kommen anorganische und organische Säuren, Basen, Chelatbildner, Komplexbildner, wie β-Diketone, Proteine, die komplexbildende Strukturen aufweisen können, Aminosäuren oder Silane in Frage. Das Oberflächenmodifizierungsmittel kann in einer bevorzugten Ausführungsform ein Komplexbildner sein, der durch Komplexierung auf der Oberfläche der Nanopartikel die Modifizierung bildet. Konkrete Beispiele für Oberflächenmodifizierungsmittel sind gesättigte oder ungesättigte Mono- und Polycarbonsäuren, die entsprechenden Säureanhydride, Säurechloride, Ester und Säureamide, Aminosäuren, Proteine, Imine, Nitrile, Isonitrile, Epoxyverbindungen, Mono- und Polyamine, β-Dicarbonylverbindungen, wie β-Diketone, Oxime, Alkohole, Alkylhalogenide, Metallverbindungen, die über eine funktionelle Gruppe verfügen, die mit den Oberflächengruppen der Partikel reagieren kann, z.B. Silane mit hydrolysierbaren Gruppen mit mindestens einer nicht hydrolysierbaren Gruppe, z.B. hydrolysierbare Silane der obigen Formel (II). Spezielle Verbindungen für Oberflächenmodifizierungsmittel sind z.B. in den oben genannten WO 93/21127 und WO 96/31572 genannt.

Besonders bevorzugte Oberflächenmodifizierungsmittel sind gesättigte oder ungesättigte Carbonsäuren, β-Dicarbonylverbindungen, Amine, Phosphonsäuren, Sulfonsäuren oder Silane. Wie gesagt, hat die Funktionsgruppe in einer bevorzugten Ausführungsform mindestens eine funktionelle Gruppe.

Hierfür werden Oberflächenmodifizierungsmittel verwendet, die neben einer funktionellen Gruppe für die Anbindung an die Oberfläche der Nanopartikel mindestens eine weitere funktionelle Gruppe umfassen.

Beispiele für eine weitere funktionelle Gruppe für die Funktionsgruppe sind Hydroxy, Epoxid, Thiol, Amino, Carboxyl, Carbonsäureanhydrid, Isocyanato, Sulfonsäuregruppen, Phosphonsäuregruppen, quaternäre Amingruppen, C-C-Doppelbindungsgruppen, wie Acryl oder Methacryl, oder Carbonyl. Im weiteren Sinne kann man hierzu auch fluorierte Kohlenwasserstoffgruppen zählen. Dementsprechend werden dafür bi-, tri- oder höherfunktionelle Oberflächenmodifizierungsmittel verwendet, wobei bevorzugt Carbonsäuren, β-Dicarbonylverbindungen, Amine, Phosphonsäuren, Sulfonsäuren oder Silane mit mindestens einer zusätzlichen Gruppe ausgewählt aus den oben genannten funktionellen Gruppen bevorzugt sind, wie ungesättigte Carbonsäuren, Hydroxycarbonsäuren, Aminosäuren, Aminosulfonsäuren, Aminophosphonsäuren, funktionalisierte β-Dicarbonylverbindungen, Epoxysilane, (Meth)acrylsilane oder Isocyanatosilane.

Beispiele für bevorzugte Verbindungen, die zur Oberflächenmodifizierung verwendet werden, werden im Folgenden ausgeführt:

Beispiele für Carbonsäuren, die vorzugsweise 1 bis 24 Kohlenstoffatome enthalten, sind gesättigte Monocarbonsäuren (z.B. Ameisensäure, Essigsäure, Propionsäure, Buttersäure, Pentansäure, Hexansäure, Caprinsäure, Stearinsäure, Phenylessigsäure, Benzoesäure), gesättigte Polycarbonsäuren mit 2 oder mehr Carboxylgruppen (z.B. Oxalsäure, Malonsäure, Adipinsäure, Bernsteinsäure, Glutarsäure und Phthalsäure), ungesättigte Carbonsäuren (z.B. Acrylsäure, Methacrylsäure Crotonsäure, Maleinsäure, Fumarsäure und Ölsäure) und Hydroxycarbonsäuren (z. B. Glycolsäure, Milchsäure, Äpfelsäure und Citronensäure) sowie Derivate der Carbonsäuren, wie Anhydride, Ester (vorzugsweise $C_1$-$C_4$-Alkylester, z.B. Methylmethacrylat) und Amide.

Beispiele für β-Dicarbonylverbindungen, die vorzugsweise 4 bis 12, bevorzugter 5 bis 8 Kohlenstoffatomen enthalten, sind Acetylaceton, 2,4-Hexandion, 3,5-Heptandion, Acetessigsäure und Acetessigsäure-$C_1$-$C_4$-alkylester; sowie funktionalisierte Dicarbonylverbindungen, wie 2-Acetoacetoxyethylmethacrylat, Hexafluoracetylaceton und Acetoacetamid.

Weitere Beispiele sind Mono- und Polyamine, insbesondere solche der allgemeinen Formel $R_{3-n}NH_n$, worin n = 0, 1 oder 2 und die Reste R unabhängig voneinander Alkylgruppen mit 1 bis 12, insbesondere 1 bis 8 und besonders bevorzugt 1 bis 6 Kohlenstoffatomen darstellen (z.B. Methyl, Ethyl, n- und i-Propyl, Butyl oder Hexyl) und Ethylenpolyamine (z.B. Ethylendiamin, Diethylentriamin etc.); Sulfonsäuren, wie 2-Aminoethansulfonsäure und 3-Aminobenzolsulfonsäure, Phosphonsäuren, Aminosäuren; Imine; und Silane, wie z.B. die hydrolysierbaren Silane mit mindestens einer nicht hydrolysierbaren Gruppen der obigen allgemeinen Formel (II), wobei solche mit einer funktionellen Gruppe am nicht hydrolysierbaren Rest bevorzugt sind.

Beispiele für weitere geeignete Oberflächenmodifikatoren sind quaternäre Ammoniumsalze der Formel $NR^1R^2R^3R^{4+}X^-$, worin $R^1$ bis $R^4$ gegebenenfalls voneinander verschiedene aliphatische, aromatische oder cycloaliphatische Gruppen mit vorzugsweise 1 bis 12, insbesondere 1 bis 8 Kohlenstoffatomen darstellen, wie z.B. Alkylgruppen mit 1 bis 12, insbesondere 1 bis 8 und besonders bevorzugt 1 bis 6 Kohlenstoffatomen (z.B. Methyl, Ethyl, n- und i-Propyl, Butyl oder Hexyl), und $X^-$ für ein anorganisches oder organisches Anion steht, z.B. Acetat, OH $Cl^-$, Br oder I .

Die Kohlenstoffketten dieser Verbindungen können durch O-, S-, oder NH-Gruppen unterbrochen sein. Derartige Oberflächenmodifizierungsmittel sind z.B. Oxaalkansäuren, wobei 1, 2, 3 oder mehr Oxagruppen enthalten sein können. Beispiele sind 3,6,9-Trioxadecansäure, 3-Oxabutansäure, 2,6-Dioxaheptansäure und deren Homologe.

Bevorzugte Beispiele für Oberflächenmodifizierungsmittel, die über eine zusätzliche Gruppe verfügen, die z.B. zur Vernetzung dienen kann, sind funktionalisierte β-Dicarbonylverbindungen, wie 2-Acetoacetoxyethylmethacrylat, Hexafluoracetylaceton und Acetoacetamid, Aminosulfonsäuren, wie 2-Aminoethansulfonsäure und 3-Aminobenzolsulfonsäure, ungesättigte Carbonsäuren, wie Methacrylsäure und Ölsäure, und Hydroxycarbonsäuren, wie Milchsäure.

Die erfindungsgemäß hergestellten Nanopartikel können auch mit einem anderen Material unter Bildung von Teilchen mit Kern-Schale-Aufbau beschichtet werden. Als Überzugsmaterial kommen anorganische, organisch modifizierte anorganische oder organische polymere Materialien in Betracht. Anorganische oder organisch modifizierte anorganische Überzüge oder Beschichtungen können z.B. aus den vorstehend genannten hydrolysierbaren Verbindungen erhalten werden. Organische Überzüge können aus üblichen, als Bindemittel in Beschichtungszusammensetzungen verwendeten organischen Polymeren oder gegebenenfalls modifizierten natürlich vorkommenden Polymeren, wie verschiedenen Zuckern, z.B. Stärke, und Derivaten davon, Proteinen oder Cellulosen oder Derivaten davon gebildet werden.

Die Nanopartikel nach der Erfindung können als solche oder als Sol bzw. auch in Form einer die Nanopartikel enthaltenden Zusammensetzung verwendet werden. Die Zusammensetzung kann für den Anwendungszweck geeignete Additive enthalten. Insbesondere kann die Zusammensetzung einen oder mehrere übliche Matrixbildner enthalten.

Als Zusammensetzungen, die Nanopartikel nach der Erfindung enthalten, kommen z.B. die verschiedensten Beschichtungssysteme, wie Lacke, Kleber, Massen, wie Dichtmassen und Formmassen, Komposite, keramische Rohstoffe, wie Schlicker, Pasten, Suspensionen, Sole aller Art, Glasschmelzen und glasbildende Sole, Lösungen und gelöste Monomere, Polymere und Polymerschmelzen in Frage, die auch noch andere Komponenten, z.B. die genannten Matrixbildner, Weichmacher, thermisch und strahlungsinduzierte Polymerisations- und Polykondensationskatalysatoren und bekannte weitere Additive, auch andere Nanopartikel, enthalten können. Ebenso kommen Metalle oder Kombinationen von polymeren, glasartigen, metallischen oder keramischen Matrixvorstufen als Hybridmaterialien als Matrixbildner in Frage.

Gegebenenfalls können auch organische Monomere, Oligomere oder Polymere aller Art als organische matrixbildende Materialien enthalten sein, die als Flexibilisatoren dienen, wobei es sich um übliche organische Bindemittel handeln kann. Diese können zur Verbesserung der Beschichtungsfähigkeit verwendet werden. In der Regel werden sie nach Fertigstellung der Schicht photokatalytisch abgebaut. Die Oligomere und Polymere können funktionelle Gruppen aufweisen, über die eine Vernetzung möglich ist. Diese Vernetzungsmöglichkeit ist auch gegebenenfalls bei den oben erläuterten organisch modifizierten anorganischen matrixbildenden Materialien möglich. Auch Mischungen anorganischer, organisch modifizierter anorganischer und/oder organischer matrixbildender Materialien sind möglich.

Die hergestellten Partikel können in alle Arten an Beschichtungen eingebracht werden, wie beispielsweise in EP 1 525 338 B1, beschrieben.

Die erhaltenen photokatalytischen Schichten können z.B. als selbstreinigende Oberflächen (gegebenenfalls durch Bestrahlung mit Licht unterstützt) oder zur Luftreinigung eingesetzt werden. Sie eignen sich für die verschiedensten Anwendungen für antimikrobielle Zwecke und/oder zur Selbstreinigung, z.B. für Maschinen, Anstriche, Lacke, Möbel, Fassaden, Dächer, Textilien, Fahrzeuge, Signalanlagen, Folien, Schutz- und Trennwände, Verkehrstechnik, Automobile, Luft- und Schienenfahrzeuge, Fenster, Türen, Gewächshäuser, Mauern, Fliesen, Fußböden, Zelte, Planen, Außenanlagen, Zäune, Natursteine, Beton, Putze, Pflaster, Bodenplatten, Denkmäler, Hölzer, Platten, Verkleidungen, Fensterrahmen, Abdeckungen, Kunststoffoberflächen aller Art, Kunststoffverscheibungen, Helme, Visiere, Gehäuse, Gerätschaften aller Art, z.B. medizinische Geräte, Haushaltsgeräte, Verkehrsschilder, Stahlkonstruktionen und Stahlfassaden, Antibeschlagsschichten, z.B. auf Glas, Spiegeln, Verkleidungen oder Abtrennungen.

Ein besonderer Anwendungsbereich ist die Sterilisation bzw. der Schutz von Instrumenten aller Art, und insbesondere von medizinischen, einschließlich tier- und zahnmedizinischen Geräten und Geräten des Sanitärbereichs, gegen Verschmutzung. Wichtige weitere Anwendungsgebiete sind Lebensmitteltechnologie und Milchwirtschaft.

Im Falle von photokatalytisch aktiven Nanopartikeln eignen sich die erhaltenen Partikel außerdem zur Abscheidung von metallischen Schichten auf entsprechend beschichteten Oberflächen. Durch die verbesserte photokatalytische Aktivität, insbesondere im sichtbaren Bereich, erhöht sich die Effektivität der Abscheidung erheblich. Auch erlauben die Wellenlängen im sichtbaren Bereich die Verwendung von günstigeren Lichtquellen, Optiken und Masken aus kostengünstigerem Glas. Aufgrund der höheren Aktivität auch im UV-Bereich wird auch eine verbesserte Abscheidung bei Verwendung bisheriger Lichtquellen und Optiken für den UV-Bereich erreicht.

Dazu wird zunächst ein Substrat mit einer Initiatorschicht umfassend erfindungsgemäße photokatalytisch aktive dotierte Nanopartikel, bevorzugt umfassend $ZnO_2$ oder $TiO_2$, bereitgestellt.

Das Substrat, das mit der photokatalytischen Initiatorschicht beschichtet werden soll, kann jedes für diesen Zweck geeignete Material sein. Beispiele für geeignete Materialien sind Metalle oder Metalllegierungen, Glas, Keramik, einschließlich Oxidkeramik, Glaskeramik oder Kunststoffe, sowie Papier und andere zellulosehaltige Materialien. Selbstverständlich sind auch Substrate verwendbar, die eine Oberflächenschicht aus den vorstehend genannten Materialien aufweisen. Bei der Oberflächenschicht kann es sich z.B. um eine Metallisierung, eine Emaillierung, eine Glas- oder Keramikschicht oder eine Lackierung handeln.

Beispiele für Metalle oder Metalllegierungen sind Stahl, einschließlich Edelstahl, Chrom, Kupfer, Titan, Zinn, Zink, Messing und Aluminium. Beispiele für Glas sind Natronkalkglas, Borosilikatglas, Bleikristall und Kieselglas. Es kann sich z.B. um Flachglas, Hohlglas wie Behälterglas, oder um Laborgeräteglas handeln. Bei der Keramik handelt es sich z.B. um eine Keramik auf Basis der Oxide $SiO_2$, $Al_2O_3$, $ZrO_2$ oder $MgO$ oder der entsprechenden Mischoxide. Beispiele für den Kunststoff, der, wie auch das Metall, als Folie vorliegen kann, sind Polyethylen, z.B. HDPE oder LDPE, Polypropylen, Polyisobutylen, Polystyrol (PS), Polyvinylchlorid (PVC) , Polyvinylidenchlorid, Polyvinylbutyral, Polytetrafluorethylen, Polychlortrifluorethylen, Polyacrylate, Polymethacrylate wie Polymethylmethacrylat (PMMA), Polyamid, Polyethylenterephthalat (PET), Polycarbonat, regenerierte Cellulose, Cellulosenitrat, Celluloseacetat, Cellulosetriacetat (TAC), Celluloseacetatbutyrat, Polyethylennaphtalat (PEN), Cycloolefin-Copolymere (COC) oder Kautschuk-Hydrochlorid. Eine lackierte Oberfläche kann aus üblichen Grundanstrichen oder Lacken gebildet sein. In einer bevorzugten Ausführungsform sind die Substrate Folien, insbesondere Polyethylenterephthalatfolien oder Polyimidfolien.

Dazu wird üblicherweise eine Dispersion der Nanopartikel (Initiatorzusammensetzung) auf das Substrat aufgebracht.

Bei der Initiatorzusammensetzung handelt es sich in der Regel um eine Dispersion der Nanopartikel in mindestens einem Lösungsmittel. Der Anteil der Nanopartikel beträgt dabei unter 20 Gew.-%, bevorzugt unter 10 Gew.-%, besonders bevorzugt unter 5 Gew.-%. Ein bevorzugter Bereich liegt zwischen 0,5 Gew.-% und 3 Gew.-%. Beispiele sind 1 Gew.-%, 1,5 Gew.-%, 2 Gew.-% und 2,5 Gew.-%. Dabei bezieht sich der Anteil auf die Initiatorzusammensetzung.

Als Lösungsmittel eignen sich dem Fachmann bekannte Lösungsmittel für Nanopartikel. Bevorzugt sind Lösungsmittel, welche einen Siedepunkt von unter 150 °C aufweisen. Beispiele hierfür sind deionisiertes $H_2O$, Methanol,

Ethanol, Isopropanol, n-Propanol oder Butanol. Es können auch Mischungen eingesetzt werden.

Es können noch wie vorstehend beschrieben Oberflächenmodifizierungsmittel, wie Karbonsäuren, sowie Säuren oder Basen zugegeben werden.

Zum Aufbringen der Initiatorzusammensetzung können übliche Verfahren verwendet werden, beispielsweise Tauchen, Rollen, Rakeln, Fluten, Ziehen, Spritzen, Schleudern oder Aufstreichen. Die aufgebrachte Dispersion wird gegebenenfalls getrocknet und wärmebehandelt, etwa zur Härtung oder Verdichtung. Die dafür verwendete Wärmebehandlung hängt natürlich vom Substrat ab. Bei Kunststoffsubstraten oder Kunststoffoberflächen, die in der Regel eine Sperrschicht aufweisen, können naturgemäß keine sehr hohen Temperaturen verwendet werden. So werden Polycarbonat (PC)-Substrate z.B. bei etwa 130 °C für 1 h wärmebehandelt. Allgemein erfolgt die Wärmebehandlung z.B. bei einer Temperatur von 100 bis 200 °C und, sofern kein Kunststoff vorhanden ist, bis zu 500 °C oder mehr. Die Wärmebehandlung erfolgt z.B. 2 min bis 2 h.

In einem nächsten Schritt wird eine Vorläuferzusammensetzung umfassend mindestens eine Vorläuferverbindung für eine Metallschicht auf das Substrat aufgetragen. Zum Aufbringen der Vorläuferzusammensetzung können übliche Verfahren verwendet werden, beispielsweise Tauchen, Rollen, Rakeln, Fluten, Ziehen, Spritzen, Schleudern oder Aufstreichen. Üblicherweise ist die Vorläuferzusammensetzung eine Lösung oder Suspension der mindestens einen Vorläuferverbindung. Diese Lösung kann auch ein Gemisch aus mehreren Vorläuferverbindungen enthalten. Auch können weitere Hilfsstoffe, wie Reduktionsmittel oder Benetzungshilfsmittel in der Lösung enthalten sein.

Bei der Vorläuferverbindung handelt es sich bevorzugt um einen Metallkomplex. Dieser umfasst mindestens ein Metallion oder ein Metallatom und mindestens eine Art von Liganden. Bei dem Metall handelt es sich beispielsweise um Kupfer, Silber, Gold, Nickel, Zink, Aluminium, Titan, Chrom, Mangan, Wolfram, Platin oder Palladium. In einer bevorzugten Ausführungsform ist die Vorläuferverbindung ein Silber,- Gold- oder Kupferkomplex, besonders bevorzugt ein Silberkomplex. Die Vorläuferverbindung kann auch mehrere Arten von Metall oder Mischungen von Metallkomplexen umfassen.

Als Ligand werden in der Regel Chelatliganden eingesetzt. Diese sind in der Lage besonders stabile Komplexe zu bilden. Dabei handelt es sich um Verbindungen, welche mehrere Hydroxylgruppen und/oder Aminogruppen aufweisen. Bevorzugt sind Verbindungen mit einem Molekulargewicht von unter 200 g/mol, besonders bevorzugt Verbindungen mit mindestens einer Hydroxylgruppe und mindestens einer Aminogruppe. Beispiele für mögliche Verbindungen sind 3-Amino-1,2-propandiol, 2-Amino-1-butanol, Tris(hydroxymethyl)-aminomethan (TRIS), $NH_3$, Nikotinamid oder 6-Aminohexansäure. Es können auch Mischungen dieser Liganden verwendet werden. Im Falle des bevorzugten Silberkomplexes ist als Ligand TRIS bevorzugt.

Die Vorläuferzusammensetzung ist bevorzugt eine Lösung der Vorläuferverbindung. Als Lösungsmittel kommen alle geeigneten Lösungsmittel in Betracht. Dies sind beispielsweise Wasser, Alkohole, wie Methanol, Ethanol, n-Propanol oder i-Propanol. Es können auch Mischungen der Lösungsmittel verwendet werden, bevorzugt Mischungen von Wasser und Ethanol.

Die Vorläuferzusammensetzung kann zusätzlich noch weitere Hilfsmittel, wie Tenside oder unterstützende Reduktionsmittel enthalten.

Die Vorläuferzusammensetzung kann auf beliebige Weise auf das Substrat aufgetragen werden. Dabei wird die Vorläuferzusammensetzung so aufgetragen, dass durch die photokatalytische Aktivität der Initiatorschicht direkt oder indirekt die Reduktion des Metallions zum Metall ausgelöst werden kann. Üblicherweise geschieht dies dadurch, dass die Vorläuferzusammensetzung direkt auf die Initiatorschicht aufgetragen wird.

Zum Aufbringen der Vorläuferzusammensetzung können übliche Verfahren verwendet werden, beispielsweise Tauchen, Sprühen, Rollen, Rakeln, Fluten, Ziehen, Spritzen, Schleudern oder Aufstreichen.

In einem nächsten Schritt wird das Metallion der Vorläuferverbindung durch Einwirkung von elektromagnetischer Strahlung auf den Initiator zum Metall reduziert. Dabei bildet sich eine metallische Schicht. Bei der elektromagnetischen Strahlung handelt es sich um Strahlung mindestens einer Wellenlänge zur Anregung des Initiators. Dabei kann die Bestrahlung durch Verwendung einer flächigen Strahlungsquelle, wie einer Lampe, oder durch Laser geschehen. Bevorzugt wird Strahlung mit einer Wellenlänge im sichtbaren und/oder ultravioletten (UV) Bereich des elektromagnetischen Spektrums verwendet, bevorzugt Strahlung mit einer Wellenlänge von < 600 nm, beispielsweise zwischen 200 und 450 nm oder zwischen 250 nm bis 450 nm.

Die erfindungsgemäßen hergestellten Nanopartikel zeichnen sich insbesondere dadurch aus, dass sie eine photokatalytische Aktivität bei Wellenlängen von über 400 nm zeigen, insbesondere über 400 nm und unter 450 nm. So können auch mit bei diesen Wellenlängen metallische Schichten abgeschieden werden. Dadurch ist auch eine Abscheidung durch handelsübliches Glas hindurch möglich. Auch ist die Aktivität insgesamt höher, als bei undotierten Partikeln.

Als Lichtquelle kann jede geeignete Lichtquelle verwendet werden. Beispiele für eine Lichtquelle sind Laser, LED, Quecksilberdampflampen oder Xenonlampen.

Die Lichtquelle ist in geeignetem Abstand zu dem zu belichtenden Substrat angeordnet. Der Abstand kann dabei beispielsweise zwischen 2,5 cm und 50 cm betragen. Die Intensität der Strahlung kann dabei in einem Spektralbereich von 250 nm bis 410 nm zwischen 1 mW/cm$^2$ und 10 W/cm$^2$ liegen.

Die Bestrahlung sollte möglichst senkrecht zur zu belichtenden Oberfläche erfolgen.

Die Bestrahlung wird in der zur Bildung der metallischen Schicht ausreichenden Dauer durchgeführt. Die Dauer hängt dabei von der Beschichtung, der Art des Initiators, der Art der Lampe, des verwendeten Wellenlängenbereichs und der Intensität der Bestrahlung ab. Falls leitfähige Strukturen erzeugt werden sollen, kann eine längere Bestrahlung erforderlich sein. Bevorzugt ist eine Dauer der Bestrahlung zwischen 5 Sekunden und 10 Minuten, bevorzugt zwischen 20 Sekunden und 4 Minuten.

Falls zur Bestrahlung ein Laser verwendet wird, kann der Laserstrahl, beispielsweise zur Erzeugung von Strukturen relativ zum Substrat bewegt werden.

Sofern gewünscht wird das Substrat nach der Bestrahlung und Reduktion der Vorläuferverbindung weiter behandelt. So kann beispielsweise die nicht reduzierte überschüssige Vorläuferzusammensetzung durch Spülen der Oberfläche entfernt werden, beispielsweise mit deionisiertem Wasser oder einer anderen geeigneten Substanz. Das beschichtete Substrat kann danach getrocknet werden, beispielsweise durch Erwärmen in einem Ofen, Druckluft und/oder durch Trocknen bei Raumtemperatur.

Es können auch noch weitere Schichten, beispielsweise zum Schutz der beschichteten Oberfläche vor Oxidation und Wasser oder vor UV-Strahlung aufgebracht werden.

Sofern gewünscht erfolgt beim Auftragen der Vorläuferzusammensetzung und/oder bei der Reduktion eine Strukturierung. Darunter wird im Sinne der Erfindung eine Vorbereitung der räumlich begrenzten Erzeugung der metallischen Struktur verstanden. Dies ist auf unterschiedliche Weise möglich. Zum einen kann das Substrat nur in bestimmten Bereichen mit der Initiatorzusammensetzung beschichtet werden. Außerdem ist es möglich, die Vorläuferzusammensetzung nur auf bestimmte Bereiche aufzubringen. Desweiteren kann natürlich auch die Einwirkung der elektromagnetischen Strahlung auf bestimmte Bereiche begrenzt werden. Diese Verfahren können natürlich auch in Kombination verwendet werden. So ist es beispielsweise möglich, die Vorläuferzusammensetzung flächig aufzubringen und dann durch eine Maske zu belichten. Es ist natürlich ebenso möglich, die Vorläuferzusammensetzung gezielt aufzubringen und danach flächig zu belichten.

Für die Qualität der erhaltenen Strukturen spielt neben der photokatalytischen Aktivität des Initiators auch die Qualität, beispielsweise die Benetzungsfähigkeit oder Rauheit, der Initiatorschicht in Bezug auf die Vorläuferzusammensetzung eine Rolle. Gerade die erfindungsgemäßen Initiatorzusammensetzungen zeichnen sich dadurch aus, dass auf ihnen ein gezieltes Auftragen der Vorläuferzusammensetzung und/oder eine sehr gezielte Reduktion der Vorläuferverbindung möglich sind.

Sofern gewünscht, umfasst die Strukturierung Strukturen mit einer minimalen lateralen Ausdehnung von unter 500 um. Dies bedeutet, dass die hergestellten Strukturen auf dem Substrat eine minimale Breite von 500 um aufweisen, bevorzugt ist eine Ausdehnung von unter 100 $\mu$m, 50 $\mu$m, 20 $\mu$m, besonders bevorzugt 10 $\mu$m, insbesondere 5 $\mu$m oder 1 $\mu$m.

Für die erzielte Auflösung der metallischen Strukturen, d.h. der Ausbildung der Metallschicht, ist die Struktur der gebildeten photokatalytischen Schicht von Bedeutung. Neben der Verwendung der erfindungsgemäß hergestellten Nanopartikel ist es möglich, die erzielte Auflösung durch eine Vorbehandlung des Substrats zu erreichen. Eine solche Vorbehandlung kann auch das Aufbringen einer weiteren Schicht bedeuten.

Sofern gewünscht umfasst die Vorbehandlung eine Plasmabehandlung, Koronabehandlung, Flammenbehandlung und/oder das Auftragen und Härten einer organisch-anorganischen Beschichtung. Eine Plasmabehandlung, Koronabehandlung und/oder Flammenbehandlung kommt insbesondere bei Foliensubstraten, insbesondere bei Kunststofffolien in Betracht. Dabei wurde gefunden, dass eine solche Behandlung die Qualität der erhaltenen photokatalytischen Schicht verbessert.

Mögliche Wege zum Erhalt von Plasma unter Vakuumbedingungen sind in der Literatur häufig beschrieben worden. Die elektrische Energie kann durch induktive oder kapazitive Mittel verknüpft werden. Sie kann Gleichstrom oder Wechselstrom sein; die Frequenz des Wechselstroms kann von einigen kHz bis in den MHz-Bereich reichen. Eine Energiezufuhr im Mikrowellenbereich (GHz) ist auch möglich.

Als primäre Plasmagase können beispielsweise He, Argon, Xenon, $N_2$, $O_2$, $H_2$, Dampf oder Luft, und ebenso Gemische aus diesen Verbindungen verwendet werden. Bevorzugt ist ein Sauerstoffplasma.

Üblicherweise werden die Substrate vorher gesäubert. Dies kann durch einfaches Abspülen mit einem Lösungsmittel geschehen. Die Substrate werden danach gegebenenfalls getrocknet und dann für unter 5 Minuten mit Plasma behandelt. Die Behandlungsdauer kann von der Empfindlichkeit des Substrats abhängen. Üblicherweise beträgt sie zwischen 1 und 4 Minuten.

Eine weitere Möglichkeit die Qualität der photokatalytischen Schicht zu verbessern, ist die vorherige Flammenbehandlung der Oberfläche. Eine solche Behandlung ist dem Fachmann bekannt. Die auszuwählenden Parameter werden durch das bestimmte zu behandelnde Substrat vorgegeben. Beispielsweise werden die Flammentemperaturen, die Flammenintensität, die Verweilzeiten, der Abstand zwischen Substrat und Ofen, das Wesen des Verbrennungsgases, Luftdruck, Feuchtigkeit, auf das in Frage stehende Substrat abgestimmt. Als Flammengase können beispielsweise Methan, Propan, Butan oder ein Gemisch aus 70 % Butan und 30 % Propan verwendet werden. Auch diese Behandlung findet bevorzugt bei Folien, besonders bevorzugt bei Kunststofffolien Anwendung.

Ein besonderer Vorteil des beschriebenen Verfahrens liegt darin, dass die verwendeten Zusammensetzungen auf einfache Weise auf die Substrate aufgetragen werden. Dabei ermöglicht die Initiatorschicht mit den Nanopartikeln die Herstellung von besonders feinen Strukturen in nur wenigen Schritten. Zum Einsatz kommen zu diesem Zweck alle bekannten Druckverfahren, wie der Tintenstrahldruck, der Tiefdruck, der Siebdruck, der Offsetdruck oder der Hoch- und Flexodruck. Oftmals werden für den Druck der elektrischen Funktionalitäten auch Kombinationsdrucke der vorab erwähnten Druckverfahren eingesetzt. Es kann nötig sein, die verwendeten Druckplatten, -walzen oder Stempel an die Eigenschaften der Zusammensetzungen anzupassen, beispielsweise durch Anpassung ihrer Oberflächenenergie.

Bei den durch Strukturierung aufgetragenen Strukturen gibt es eigentlich keine Beschränkung. So können sowohl verbundene Strukturen, wie Leiterbahnen aufgetragen werden. Außerdem ist es möglich auch punktförmige Strukturen aufzutragen. Aufgrund der guten Auflösung ist es mit dem Verfahren möglich, für das Auge nicht sichtbare leitfähige Punkte oder Linien auf eine Folie aufzutragen. Dies spielt bei der Herstellung von Oberflächen für Touch-Screens eine große Rolle.

Ein besonderer Vorteil des Verfahrens liegt in der Herstellung von leitfähigen Strukturen. Diese eignen sich als Leiterbahnen in elektronischen Anwendungen, insbesondere in Touch-Screen-Displays, Solarkollektoren, Displays, als RFID-Antenne oder in Transistoren. Sie eignen sich daher als Ersatz in Produkten, welche bisher auf ITO (Indiumzinnoxid) Basis hergestellt wurden, wie beispielsweise in TCO-Beschichtungen (TCO: transparent conductive oxide).

Die Strukturen können aber auch im Bereich von Transistoren eingesetzt werden.

Weitere Einzelheiten und Merkmale ergeben sich aus der nachfolgenden Beschreibung von bevorzugten Ausführungsbeispielen in Verbindung mit den Unteransprüchen. Hierbei können die jeweiligen Merkmale für sich alleine oder zu mehreren in Kombination miteinander verwirklicht sein. Die Möglichkeiten, die Aufgabe zu lösen, sind nicht auf die Ausführungsbeispiele beschränkt. So umfassen beispielsweise Bereichsangaben stets alle - nicht genannten - Zwischenwerte und alle denkbaren Teilintervalle.

Die Ausführungsbeispiele sind in den Figuren schematisch dargestellt. Gleiche Bezugsziffern in den einzelnen Figuren bezeichnen dabei gleiche oder funktionsgleiche bzw. hinsichtlich ihrer Funktionen einander entsprechende Elemente. Im Einzelnen zeigt:

Fig. 1    TEM-Aufnahme erfindungsgemäßer Nanopartikel;
Fig. 2    TEM-Aufnahme erfindungsgemäßer Nanopartikel;
Fig. 3    Aufnahme einer Belichtung;

1. Synthese von N-dotiertem $TiO_2$

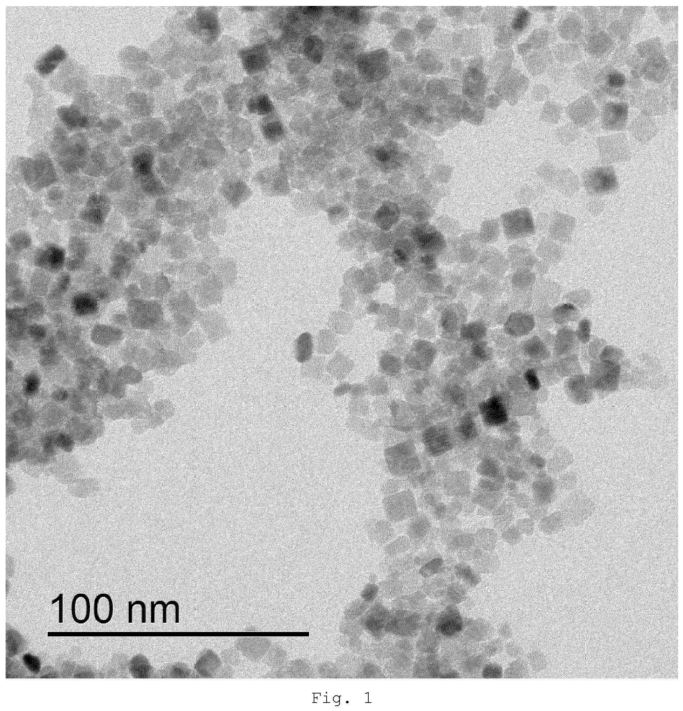

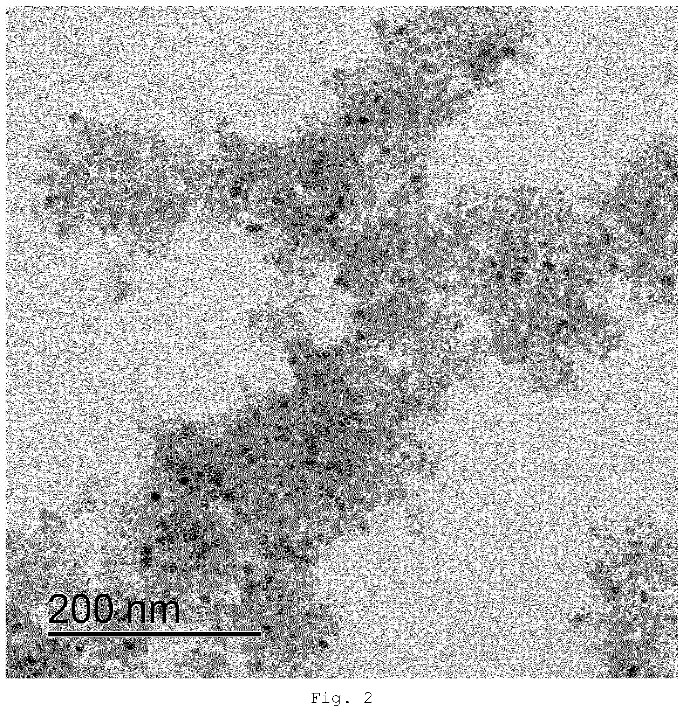

N-dotierte $TiO_2$-Nanopartikel wurden mittels des solvothermalen Prozesses hergestellt. 24,26 g Titanisopropoxid wurden in 26,36 g 1-Propanol gelöst. 1,58 g $HNO_3$ (68 %) wurden zu 5 g 1-Propanol gegeben und unter Rühren zur Titantetraisopropoxidlösung gegeben. 2,56 g Wasser wurden in 10 g 1-Propanol gelöst und langsam zur Titantetraisopropoxidlösung getropft. Die Lösung wurde 20 min gerührt, in Teflongefäße für den Autoklaven umgefüllt und für 1 h auf 225 °C erhitzt. Die Heizrate betrug 5 K/min. Nach dem Abkühlen wurde die überstehende Lösung abdekantiert und das Lösemittel aus dem Rückstand am Rotationsverdampfer entfernt. Ausbeute: 7,5 g eines braunen Feststoffs, Partikelgröße: 11,8 nm. Die Figuren 1 und 2 zeigen TEM-Aufnahmen der erhaltenen Partikel.

2. Synthese von C/N-dotiertem $TiO_2$

C/N-dotierte $TiO_2$-Nanopartikel wurden mittels eines solvothermalen Prozesses hergestellt. 24,26 g Titanisopropoxid wurden in 26,36 g 1-Propanol gelöst. 1,58 g $HNO_3$ (68 %) wurden zu 5 g 1-Propanol gegeben und unter Rühren zur Titantetraisopropoxidlösung gegeben. 2,56 g Wasser und 0,3 g Glucose wurden in 10 g 1-Propanol gelöst und langsam zur Titantetraisopropoxidlösung getropft. Die Lösung wurde 20 min gerührt, in Teflongefäße für den Autoklaven umgefüllt und für 1 h auf 225 °C erhitzt. Die Heizrate betrug 5 K/min. Nach dem Abkühlen wurde die überstehende Lösung abdekantiert und das Lösemittel aus dem Rückstand am Rotationsverdampfer entfernt. Ausbeute: 7,89 g eines braunen Feststoffs, Partikelgröße: 13,5 nm

3. Herstellung eines Sols zum Dipcoaten

0,3 - 0,9 g Partikel (gemäß Nr. 1 oder Nr. 2) wurden in 4 g 0,1 M $HNO_3$ dispergiert. 0,67 ml 3,6,9-Trioxadecansäure je 1 g Partikel wurden zugegeben. Nach zehnminütigem Rühren wurden 46 g 2-Isopropoxyethanol zugegeben.

4. Beschichtung mittels Dipcoatings

Glassubstrate wurden mittels Dipcoatings beschichtet. Ein gereinigtes Glassubstrat wurde in das Sol gemäß Nr. 3 getaucht. Die Ziehgeschwindigkeit betrug 1 mm/s - 5 mm/s. Es wurden optisch transparente Schichten erhalten.

5. Wellenlängenabhängige Photometallisierung

0,5 ml einer Mischung aus einer Silbernitratlösung (0,845 g Ag-$NO_3$ in 10 g dest. Wasser) und einer TRIS-Lösung (1,284 g Tris(hydroxymethyl)-aminomethan in 10 g dest. Wasser) wurden auf einen beschichteten Objektträger (gemäß Nr. 4) gegeben. Die Lösung wurde für 5 min mit Licht einer 1000 W Hg/Xe-Lampe, das durch einen Monochromator aufgespalten wurde, belichtet. Silberabscheidungen bis zu Wellenlängen von 435 nm wurden beobachtet.

6. Photometallisierung bei 405 nm

0,5 ml einer Mischung aus einer Silbernitratlösung (0,845 g Ag-$NO_3$ in 10 g dest. Wasser) und einer TRIS-Lösung (1,284 g Tris(hydroxymethyl)-aminomethan in 10 g dest. Wasser) wurden auf einen beschichteten Objektträger (gemäß Nr. 4) gegeben. Die Lösung wurde mit Licht einer 405 nm LED belichtet. Bereits nach 3 min werden leitfähige Schichten erhalten.

7. Photometallisierung durch eine Glasplatte

0,5 ml einer Mischung aus einer Silbernitratlösung (0,845 g Ag$NO_3$ in 10 g dest. Wasser) und einer TRIS-Lösung (1,284 g Tris(hydroxymethyl)-aminomethan in 10 g dest. Wasser) wurden auf einen beschichteten Objektträger (gemäß Nr. 4 mit Partikeln nach Nr. 1) gegeben, dieser wurde mit einem zweiten Objektträger abgedeckt und für 10 s mit Licht einer 1000 W Hg/Xe-Lampe belichtet. Es wurden leitfähige Schichten erhalten.

8. Laserdirektschreiben

0,5 ml einer Mischung aus einer Silbernitratlösung (0,845 g Ag$NO_3$ in 10 g dest. Wasser) und einer TRIS-Lösung (1,284 g Tris(hydroxymethyl)-aminomethan in 10 g dest. Wasser) wurden auf einen beschichteten Objektträger (gemäß Nr. 4 mit Partikeln nach Nr. 1) gegeben. Auf diesen wurde mittels eines Lasers (376 nm) eine Gitterstruktur geschrieben. Die erhaltene Silberstruktur ist leitfähig.

9. Maskenbelichtung

Zwischen ein beschichtetes Substrat (gemäß Nr. 4 mit Partikeln nach Nr. 1) und eine Maske aus Quarzglas wurde die Silberkomplexlösung gefüllt. Mit einer 1000 W Hg/Xe-Lampe wurde durch die Maske belichtet. Die Belichtungszeit zum Erhalt leitfähiger Strukturen (5 um Linienbreite) beträgt 1 min (für undotiertes $TiO_2$: 3 min) .

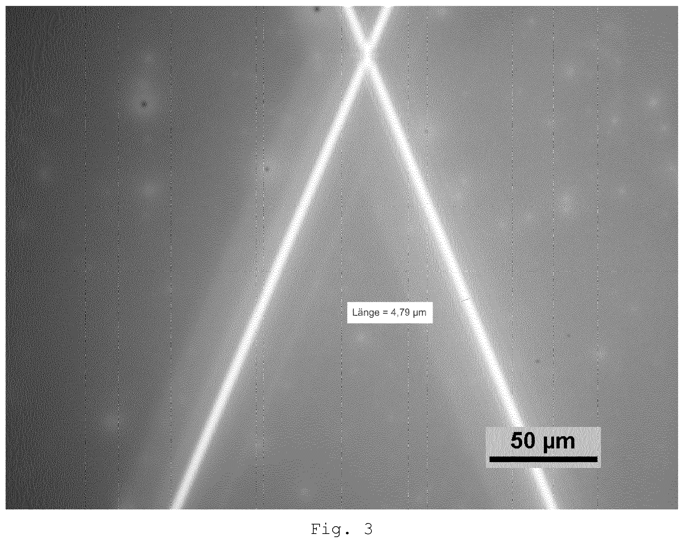

Figur 3 zeigt eine lichtmikroskopische Aufnahme einer erhaltenen metallischen Struktur nach 1 Minute Belichtung. Die Struktur hat eine Breite von 4,79 $\mu$m.

Die undotierten Partikel wurden nach DE102010052032A1 hergestellt.

48,53 Ti(O-i-Pr)$_4$ wurden zu 52,73 g 1-PrOH (n-Propanol) gegeben. Zu dieser Lösung wurde langsam eine Lösung aus Salzsäure (37 %, 3,34 g) und 10,00 g 1-PrOH zugetropft. Zu dieser Lösung wurde dann eine Mischung aus 4,02 g $H_2O$ und 20,00 g 1-PrOH getropft. Die erhaltene Lösung ist eventuell leicht gelb gefärbt und wurde in ein Druckaufschlussgefäß gefüllt (ca. 130 g). In diesem Gefäß wurde die Lösung für 2,5 h bei 210 °C behandelt.

Der Ansatz wurde dekantiert und die erhaltenen Partikel in einen Kolben überführt und das Lösungsmittel bei 40 °C im Rotationsverdampfer bei Unterdruck entfernt.

Danach wurden die Partikel analog auf die Substrate aufgebracht.

## Patentansprüche

**1.** Verfahren zur Herstellung von dotierten Nanopartikel umfassend folgende Schritte:

a) Bereitstellung einer Zusammensetzung umfassend mindestens einer hydrolysierbaren Metallverbindung, mindestens einer Verbindung mit mindestens einer Hydroxylgruppe, eine Mineralsäure umfassend mindestens ein Stickstoffatom;
b) Hydrothermale Behandlung der Zusammensetzung;

c) Isolierung der Nanopartikel.

**2.** Verfahren nach Anspruch 1, **dadurch gekennzeichnet, dass** die hydrolysierbare Verbindung eine Verbindung der Formel

$$MX_n$$

ist, wobei M ausgewählt ist aus der Gruppe enthaltend Mg, B, Al, Ga, In, Si, Ge, Sn, Pb, Y, Ti, Zr, V, Nb, Ta, Mo, W, Fe, Cu, Ag, Zn, Cd, Ce und La und n der Wertigkeit des Metalls entspricht und X eine hydrolysierbare Gruppe darstellt.

**3.** Verfahren nach einem der Ansprüche 1 oder 2, **dadurch gekennzeichnet, dass** die mindestens eine Verbindung mit mindestens einer Hydroxylgruppe einen Siedepunkt von unter 200 °C aufweist.

**4.** Verfahren nach einem der Ansprüche 1 bis 3, **dadurch gekennzeichnet, dass** die mindestens eine Verbindung mit mindestens einer Hydroxylgruppe ein niederer aliphatischer Alkohol ist.

**5.** Verfahren nach einem der Ansprüche 1 bis 3, **dadurch gekennzeichnet, dass** die Mineralsäure umfassend mindestens ein Stickstoffatom Salpetersäure ist.

**6.** Verfahren nach Anspruch 5, **dadurch gekennzeichnet, dass** die Salpetersäure in einem Mengenverhältnis eingesetzt wird, dass sich ein Molverhältnis von Stickstoff (N) zu Metall der hydrolysierbaren Metallverbindung von 0,05:1 bis 0,7:1 ergibt.

**7.** Verfahren nach einem der Ansprüche 1 bis 6, **dadurch gekennzeichnet, dass** die Zusammensetzung keine organische Verbindung umfassend mindestens ein Stickstoffatom umfasst.

**8.** Verfahren nach einem der Ansprüche 1 bis 5, **dadurch gekennzeichnet, dass** es sich um photokatalytisch aktive Nanopartikel handelt.

**9.** Verfahren nach einem der Ansprüche 1 bis 6, **dadurch gekennzeichnet, dass** es sich um photokatalytisch aktive Nanopartikel handelt, welche auch bei Wellenlängen über 400 nm photokatalytisch aktiv sind.

**Claims**

**1.** A process for producing doped nanoparticles, which comprises the following steps:

a) provision of a composition comprising at least one hydrolysable metal compound, at least one compound having at least one hydroxyl group, a mineral acid comprising at least one nitrogen atom;
b) hydrothermal treatment of the composition;
c) isolation of the nanoparticles.

**2.** The process according to claim 1, **characterized in that** the hydrolysable compound is a compound of the formula

$$MX_n$$

where M is selected from the group consisting of Mg, B, Al, Ga, In, Si, Ge, Sn, Pb, Y, Ti, Zr, V, Nb, Ta, Mo, W, Fe, Cu, Ag, Zn, Cd, Ce and La and n corresponds to the valence of the metal and X is a hydrolysable group.

**3.** The process according to either claim 1 or 2, **characterized in that** the at least one compound having at least one hydroxyl group has a boiling point below 200°C.

**4.** The process according to any of claims 1 to 3, **characterized in that** the at least one compound having at least one hydroxyl group is a lower aliphatic alcohol.

**5.** The process according to any of claims 1 to 3, **characterized in that**

the mineral acid comprising at least one nitrogen atom is nitric acid.

6.  The process according to claim 5, **characterized in that**
    the nitric acid is used in a ratio that a molar ratio of nitrogen (N) to the metal of the hydrolysable metal compound (Me) (N/Me) of from 0.05:1 to 0.7:1 is obtained.

7.  The process according to any of claims 1 to 6, **characterized in that**
    the composition does not comprise any organic compound comprising at least one nitrogen atom.

8.  The process as claimed in any of claims 1 to 5, **characterized in that**
    the nanoparticles are photocatalytically active nanoparticles.

9.  The process as claimed in any of claims 1 to 6, **characterized in that**
    the nanoparticles are photocatalytically active nanoparticles which are also photocatalytically active at wavelengths above 400 nm.


**Revendications**

1.  Procédé pour la préparation de nanoparticules dopées, comprenant les étapes suivantes :

    a) mise à disposition d'une composition comprenant au moins un composé métallique hydrolysable, au moins un composé comportant au moins un groupe hydroxy, un acide minéral comprenant au moins un atome d'azote ;
    b) traitement hydrothermique de la composition ;
    c) isolement des nanoparticules.

2.  Procédé selon la revendication 1, **caractérisé en ce que** le composé hydrolysable est un composé de formule

    $$MX_n$$

    dans laquelle M est choisi dans le groupe contenant Mg, B, Al, Ga, In, Si, Ge, Sn, Pb, Y, Ti, Zr, V, Nb, Ta, Mo, W, Fe, Cu, Ag, Zn, Cd, Ce et La et n correspond à la valence du métal et X représente un groupe hydrolysable.

3.  Procédé selon l'une quelconque des revendications 1 et 2, **caractérisé en ce que**
    ledit au moins un composé comportant au moins un groupe hydroxy présente un point d'ébullition inférieur à 200 °C.

4.  Procédé selon l'une quelconque des revendications 1 à 3, **caractérisé en ce que**
    ledit au moins un composé comportant au moins un groupe hydroxy est un alcool aliphatique inférieur.

5.  Procédé selon l'une quelconque des revendications 1 à 3, **caractérisé en ce que**
    l'acide minéral comprenant au moins un atome d'azote est l'acide nitrique.

6.  Procédé selon la revendication 5, **caractérisé en ce que** l'acide nitrique est utilisé en une proportion telle qu'il en résulte un rapport molaire de l'azote (N) au métal du composé métallique hydrolysable de 0,05:1 à 0,7:1.

7.  Procédé selon l'une quelconque des revendications 1 à 6, **caractérisé en ce que** la composition ne comprend pas de composé organique comprenant au moins un atome d'azote.

8.  Procédé selon l'une quelconque des revendications 1 à 5, **caractérisé en ce qu'**il s'agit de nanoparticules à activité photocatalytique.

9.  Procédé selon l'une quelconque des revendications 1 à 6, **caractérisé en ce qu'**il s'agit de nanoparticules à activité photocatalytique qui ont une activité photocatalytique également à des longueurs d'onde de plus de 400 nm.

100 nm

Fig. 1

Fig. 2

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102004009287 A1
- WO 2011079908 A1
- WO 9321127 A
- DE 4212633
- WO 9631572 A
- EP 1525338 B1
- DE 102010052032 A1